# FASCICULE DE BREVET EUROPEEN

(11) **EP 3 586 398 B1**
(45) Date de publication et mention de la délivrance du brevet: **18.11.2020**
(21) Numéro de dépôt: 18707892.8
(22) Date de dépôt: 23.02.2018
(51) Int. Cl.: H01Q 1/32, H04B 7/0413, H04B 7/06, H04B 7/08

(54) **DISPOSITIF ET PROCÉDÉ DE COMMUNICATION**
KOMMUNIKATIONSVORRICHTUNG UND VERFAHREN
APPARATUS AND METHOD FOR COMMUNICATION

(30) Priorité: 23.02.2017 FR 1751459
(43) Date de publication de la demande: 01.01.2020
(73) Titulaire: Valeo Comfort and Driving Assistance, 94046 Créteil Cedex (FR)
(72) Inventeur: PARVERY, Hervé, 94046 Créteil CEDEX (FR); LATHIERE, Christophe, 94046 Créteil CEDEX (FR); AUFRET, David, 94046 Créteil CEDEX (FR)
(74) Mandataire: Delaval, Guillaume Laurent
(86) Numéro de dépôt international: PCT/EP2018/054520
(87) Numéro de publication internationale: WO 2018/154057

(56) Documents cités:
- DE-A1- 19 923 661
- DE-A1- 19 923 729
- DE-A1-102010 061 995

## Description

### DOMAINE TECHNIQUE AUQUEL SE RAPPORTE L'INVENTION

La présente invention concerne les techniques de communication, en particulier utilisées dans les véhicules.

Elle concerne plus particulièrement un dispositif et un procédé de communication, ainsi qu'un véhicule associé.

### ARRIERE-PLAN TECHNOLOGIQUE

Dans les systèmes de télécommunication par ondes électromagnétiques, on utilise de plus en plus des solutions de type MIMO (pour "*Multiple Input Multiple Output*") selon lesquelles des signaux reçus respectivement par une pluralité d'antennes sont combinés de manière à produire un flux de données ayant un débit supérieur et/ou un rapport signal-bruit amélioré par rapport aux solutions classiques utilisant une seule antenne.

L'utilisation d'au moins deux antennes augmente toutefois l'encombrement nécessaire à l'implantation du système, ce qui est problématique notamment dans le cas où cette implantation a lieu dans un véhicule. On cherche en effet dans ce contexte en particulier à limiter l'espace utilisé par chacune des fonctionnalités du véhicule.

La demande de brevet DE 10 2010 061995 A1 décrit un dispositif de communication pour véhicule comprenant une antenne interne, une antenne externe, un circuit électronique comprenant une première borne, une seconde borne et une unité de traitement conçue pour produire un flux de données par combinaison de premiers signaux reçus sur la première borne et de seconds signaux reçus sur la seconde borne, et dans lequel la première borne est reliée à l'antenne externe et la seconde borne est reliée à l'antenne interne, et dans lequel le circuit électronique comprend une unité d'émission conçue pour générer un signal électrique sur la première borne. La demande de brevet DE 199 23 661 A1 décrit un dispositif de communication pour véhicule comprenant une antenne interne et une antenne externe. L'antenne extérieure qui est celle qui a la meilleure qualité est utilisée normalement. En cas de défaillance ou de bris de cette antenne, on utilise à la place l'antenne intérieure.

### OBJET DE L'INVENTION

Dans ce contexte, la présente invention propose un dispositif de communication pour véhicule comprenant une antenne interne, une antenne externe, et un circuit électronique comprenant un première borne, une seconde borne et une unité de traitement conçue pour produire un flux de données par combinaison de premiers signaux reçus sur la première borne et de seconds signaux reçus sur la seconde borne, caractérisé en ce qu'il comprend un commutateur conçu pour basculer entre une première configuration, dans laquelle la première borne est reliée à l'antenne externe et la seconde borne est reliée à l'antenne interne, et une seconde configuration, dans laquelle la première borne est reliée à l'antenne interne, et en ce que le circuit électronique comprend une unité d'émission conçue pour générer un signal électrique sur la première borne.

L'utilisation d'une antenne interne et d'une antenne externe permet de répartir l'encombrement entre intérieur et extérieur du véhicule. L'antenne interne, utilisée usuellement comme antenne de secours, est ainsi en outre utilisée en fonctionnement normal.

L'utilisation d'une antenne interne et d'une antenne externe permet en outre une bonne diversité spatiale, notamment grâce à l'isolation fournie par la paroi du véhicule (ici le toit du véhicule comme indiqué plus loin).

A cet égard, la dissymétrie d'implantation des antennes ne pose pas problème, contrairement à ce qu'on aurait pu craindre.

La solution proposée permet par ailleurs une émission optimale lorsque l'antenne externe fonctionne, tout en rendant possible une émission au moyen de l'antenne interne si l'antenne externe est défaillante, par exemple en cas d'accident, ce qui est important en particulier pour assurer un appel d'urgence.

Comme cela ressortira de l'exemple de réalisation décrit plus loin, la première borne fonctionne en effet en émission et en réception, tandis que la seconde borne fonctionne uniquement en réception.

Selon d'autres caractéristiques envisageables à titre optionnel (et donc non limitatif) :
- le dispositif de communication comprend une unité de commande conçue pour basculer le commutateur de la première configuration à la seconde configuration en cas de défaillance de l'antenne externe ;
- le dispositif de communication comprend une unité de diagnostic conçue pour délivrer une information de défaut de fonctionnement de l'antenne externe ;
- l'unité de commande est conçue pour basculer le commutateur de la première configuration à la seconde configuration à réception de l'information de défaut de fonctionnement ;
- l'antenne interne et l'antenne externe sont situées de part et d'autre d'un toit du véhicule ;
- l'antenne interne est située à moins de 5 cm (voire à moins de 2 cm) du toit du véhicule ;
- l'antenne interne et le circuit électronique sont montés sur un (même) circuit imprimé ;
- ce circuit imprimé porte en outre le commutateur susmentionné ;
- le circuit imprimé s'étend substantiellement parallèle à un toit du véhicule à moins de 5 cm du toit (le circuit imprimé étant par exemple situé entre le toit et la garniture).

L'invention propose également un véhicule comprenant un dispositif de communication tel que défini ci-dessus.

L'invention propose enfin un procédé de communication comprenant les étapes suivantes :
- production d'un flux de données par combinaison de premiers signaux reçus sur une première borne d'un circuit électronique et de seconds signaux reçus sur une seconde borne du circuit électronique, un commutateur étant dans une première configuration dans laquelle la première borne est reliée à une antenne externe à un véhicule et la seconde borne est reliée à une antenne interne au véhicule ;
- à réception d'une information indicative d'une défaillance de l'antenne externe, commande du basculement du commutateur dans une seconde configuration, dans laquelle la première borne est reliée à l'antenne interne ;
- génération d'un signal électrique sur la première borne par une unité d'émission.

Les caractéristiques optionnelles mentionnées ci-dessus peuvent également s'appliquer à ce véhicule et à ce procédé.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement un système embarqué dans un véhicule comprenant un dispositif de communication conforme à l'invention ; et
- la figure 2 représente les éléments principaux d'un tel dispositif de communication.

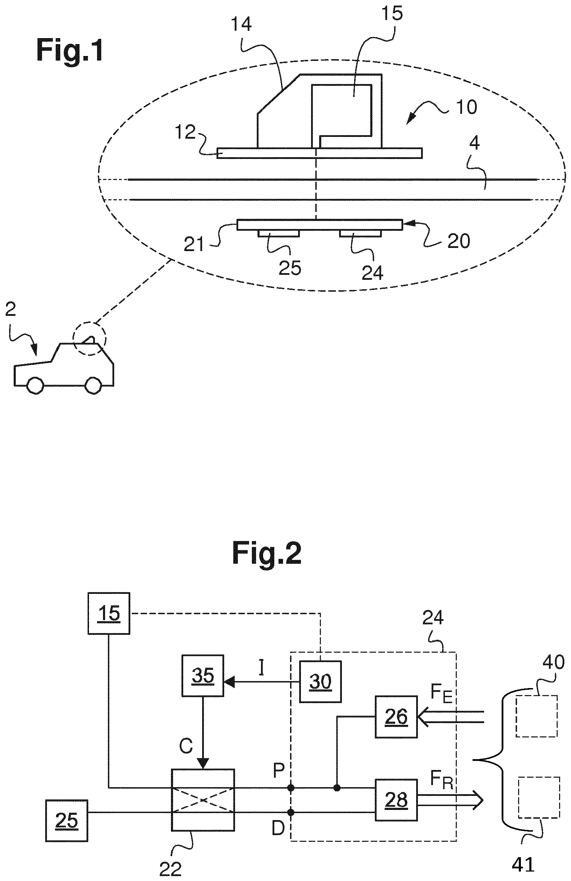

La figure 1 représente schématiquement un système embarqué dans un véhicule 2, situé au niveau d'un toit 4 du véhicule 2 (c'est-à-dire de la paroi supérieure, généralement métallique, délimitant l'intérieur - ou habitacle - et l'extérieur du véhicule 2).

Ce système embarqué comprend d'une part un ensemble externe 10 situé au-dessus du toit 4 du véhicule 2 et d'autre part une unité télématique 20 (ou TCU pour "*Telematic Control Unit*") située sous le toit 4 du véhicule 2, ici à proximité de celui-ci, et par conséquent à l'intérieur du véhicule 2.

Bien entendu, bien que l'on qualifie ici d'externe l'ensemble 10 du fait de sa situation à l'extérieur de l'habitacle du véhicule 2, cet ensemble 10 peut être abrité par un cache, réalisé par exemple en matière plastique.

Dans l'exemple décrit ici, l'ensemble externe 10 est enfermé dans un cache en forme d'aileron de requin (ou *"Shark Fin"* selon l'appellation anglo-saxonne) disposé sur le toit 4 du véhicule 2.

L'ensemble externe 10 comprend un premier circuit imprimé 12 et un second circuit imprimé 14. Le plan principal d'extension du premier circuit imprimé 12 est ici substantiellement parallèle au toit 4 du véhicule 2, c'est-à-dire globalement horizontal ; le plan principal d'extension du second circuit imprimé 14 est quant à lui perpendiculaire au toit 4 du véhicule et/ou au premier circuit imprimé 12, c'est-à-dire vertical. Une direction principale d'extension du second circuit imprimé 14 est ainsi verticale, l'autre direction principale d'extension du second circuit imprimé 14 étant orienté dans la direction d'avancement du véhicule 2 (ce qui permet son intégration dans le cache en forme d'aileron de requin).

L'ensemble externe 10 comprend une antenne 15, dénommée par la suite *"antenne externe"* (relativement au véhicule 2) du fait qu'elle est située en dehors de l'habitacle du véhicule 2, ici au-dessus du toit 4 du véhicule 2.

L'antenne externe 15 est ici portée par le second circuit imprimé 12. Comme bien visible en figure 1, l'antenne externe 15 est par exemple réalisée sous la forme d'une antenne plate formée sur le second circuit imprimé 12.

L'antenne externe 15 est une antenne cellulaire, c'est-à-dire conçue pour émettre et recevoir des signaux électromagnétiques respectivement à destination et en provenance d'une station de base d'un réseau de communications cellulaire, par exemple dans une gamme de fréquences comprises entre 500 MHz et 5 GHz (cette gamme pouvant s'étendre en pratique de 700 MHz à 2,6 GHz).

On se limite ici à la description des éléments utiles à la compréhension de l'invention, mais l'ensemble externe 10 peut comprendre en pratique d'autres composants utilisés pour d'autres fonctionnalités du véhicule.

La présence d'une seule antenne externe 15 pour la fonctionnalité de télécommunication décrite ici (comme cela ressortira de la suite de la description) permet d'ailleurs d'optimiser l'espace disponible pour ces autres fonctionnalités.

L'unité télématique 20 (réalisée par exemple sous le forme d'un boîtier télématique) comprend un circuit imprimé 21 qui porte un circuit électronique de communication 24 (parfois dénommé NAD pour *"Network Access Device"*), une antenne interne 25 (relativement au véhicule 2) et un commutateur 22.

L'antenne interne 25 est par exemple réalisée sous la forme d'une antenne monopuce (ou *"chip antenna*" selon l'appellation anglo-saxonne usuellement employée) implantée sur le circuit imprimé 21. En variante, l'antenne interne 25 pourrait être déportée sur un support en matière plastique associé au boîtier télématique. Selon une autre variante encore, l'antenne interne 25 pourrait être réalisée par métallisation sur le boîtier télématique. Dans ces différents cas, l'antenne interne 25 est intégrée au boîtier télématique et connectée électriquement au circuit électronique 24.

L'antenne interne 25 est elle aussi une antenne cellulaire, c'est-à-dire conçue pour émettre et recevoir des signaux électromagnétiques respectivement à destination et en provenance d'une station de base d'un réseau de communications cellulaire, par exemple dans une gamme de fréquences comprises entre 500 MHz et 5 GHz (cette gamme pouvant s'étendre en pratique de 700 MHz à 2,6 GHz).

Les connexions relatives et le fonctionnement du circuit électronique de communication 24 et du commutateur 22 sont décrits ci-dessous en référence à la figure 2.

L'unité télématique 20 est par exemple en pratique installée entre la garniture et le toit 4 du véhicule 2 ; l'unité télématique 20 est donc en général située à moins de 5 cm du toit 4 du véhicule 2 (et dans le cas présent à moins de 2 cm du toit du véhicule 2).

La figure 2 représente schématiquement les composants principaux permettant la mise en place d'un échange de données via la station de base susmentionnée.

Le circuit électronique de communication 24 comprend une première borne P (ou *"borne principale"*), une seconde borne D (ou *"borne diversité*"), une unité de traitement 28, une unité d'émission 26 et une unité de diagnostic 30.

L'unité de traitement 28 est conçue pour traiter les signaux électromagnétiques reçus sur les antennes 15, 25 selon une technique dite MIMO (pour "*Multiple Input - Multiple Output*", soit entrées multiples - sorties multiples). Cette technique est utilisée notamment dans le cadre de la norme LTE.

L'unité de traitement 28 est ainsi conçue pour produire un flux de données F_{R} par combinaison de premiers signaux électriques reçus sur la première borne P (en provenance d'une antenne comme expliqué ci-après) et de seconds signaux électriques reçus sur la seconde borne D (en provenance d'une autre antenne comme expliqué ci-après).

Le flux de données F_{R} produit peut ainsi être transmis (par exemple via un bus de données) à d'autres composants électroniques 41 embarqués dans le véhicule 2 comme par exemple un ordinateur de bord ou un dispositif de téléphonie (le flux de données F_{R} représentant alors dans ce cas la voix d'un interlocuteur), ici selon la norme LTE, ou pour toute autre application utilisant ce flux de données F_{R} en réception.

L'unité d'émission 26 est quant à elle conçue pour générer un signal électrique sur la première borne P (connectée à une antenne comme décrit ci-après) en fonction d'un flux de données F_{E} à émettre, afin de générer (au moyen de l'antenne connectée à la première borne P) un signal électromagnétique représentatif de ce flux de données F_{E} à destination de la station de base susmentionnée.

Le flux de données F_{E} produit peut ainsi être transmis (par exemple via un bus de données) depuis les composants électroniques 41 embarqués dans le véhicule 2.

L'unité de diagnostic 30 mesure une tension liée à l'antenne externe 15 et qui indique, selon sa valeur, soit le bon fonctionnement de l'antenne externe 15, soit la présence d'un court-circuit ou d'une déconnexion de l'antenne externe 15. L'unité de diagnostic peut ainsi délivrer une information de défaut de fonctionnement I lorsque la tension mesurée est indicative d'un court-circuit ou d'une déconnexion, ce qui se produit notamment lorsque l'antenne externe 15 est défaillante (comme dans le cas où le véhicule 2 subit un accident).

Comme visible sur la figure 2, le circuit électronique de communication 24 est relié à l'antenne externe 15 et à l'antenne interne 25 par l'intermédiaire du commutateur 22.

Le commutateur 22 peut basculer entre deux configurations (par exemple sous la commande d'une unité de commande 35 comme expliqué plus loin) :
- une première configuration (représentée en traits pointillés en figure 2) dans laquelle la première borne P est reliée à l'antenne externe 15 et la seconde borne D est reliée à l'antenne interne 25 ; et
- une seconde configuration (représentée en traits mixtes en figure 2) dans laquelle la première borne P est reliée à l'antenne interne 25 (la seconde borne D pouvant alors éventuellement être reliée à l'antenne externe 15).

L'unité télématique 20 comprend en effet ici l'unité de commande 35 déjà mentionnée. Cette unité de commande 35 reçoit l'information de défaut de fonctionnement I éventuellement délivrée par l'unité de diagnostic 30.

L'unité de commande 35 est conçue pour commander (par application d'un signal de commande C au commutateur 22) le basculement du commutateur 22 de la première configuration à la seconde configuration à réception de l'information de défaut de fonctionnement I.

L'unité de commande 35 est ici représentée séparée du circuit électronique de communication 24, mais l'unité de commande 35 pourrait en pratique être intégrée au circuit électronique de communication 24.

En fonctionnement normal, le commutateur 22 est dans la première configuration. Ainsi, la première borne P reçoit les signaux reçus par l'antenne externe 15 et la seconde borne D reçoit les signaux reçus par l'antenne interne 25, ce qui permet à l'unité de traitement 28 de fonctionner selon la technique MIMO déjà mentionnée.

Précisément, l'unité de traitement 28 produit un flux de données F_{R} par combinaison des signaux électriques reçus sur la première borne P (en provenance de l'antenne externe 15) et des signaux électriques reçus sur la seconde borne D (en provenance de l'antenne interne 25).

La séparation de l'antenne externe 15 et de l'antenne interne 25 par le toit 4 du véhicule 2 permet d'ailleurs une certaine isolation de ces antennes 15, 25, ce qui offre une bonne diversité spatiale au système de réception et améliore ainsi ses performances.

En émission, les signaux générés par l'unité d'émission 26 (sur la première borne P) sont quant à eux transmis via l'antenne externe 15, dont le gain est généralement supérieur à celui de l'antenne interne 25.

Dans cette première configuration du commutateur 22, si un défaut de fonctionnement de l'antenne externe 15 est détecté (par exemple du fait d'une défaillance de l'antenne externe 15 provoquée à cause d'un accident), l'unité de diagnostic 30 délivre l'information de défaut de fonctionnement I à l'unité de commande 35 et l'unité de commande 35 commande alors le basculement du commutateur 22 dans la seconde configuration.

La première borne P est alors connectée à l'antenne interne 25 et les signaux électriques générés par l'unité d'émission 26 (sur cette première borne P) peuvent ainsi être émis au moyen de l'antenne interne 25, malgré la défaillance de l'antenne externe 15.

Ces signaux électriques générés par l'unité d'émission 26 peuvent par exemple représenter un flux de données F_{E} généré par un module d'urgence 40 lorsque ce module d'urgence 40 détecte une situation d'accident du véhicule 2 (par exemple au moyen d'un accéléromètre embarqué dans le véhicule 2).

Un tel module d'urgence 40 permet par exemple l'émission de données F_{E} conformément à l'initiative dénommée eCall : le flux de données en émission susmentionné F_{E} comprend par exemple un identifiant du véhicule 2 et/ou des données de géolocalisation du véhicule 2.

Dans un mode de réalisation avantageux le module d'urgence permet également un échange vocal entre le ou les occupants du véhicule et un opérateur externe.

Cela implique l'utilisation au niveau du module 40, d'un flux de données en émission via l'unité d'émission 26, et en réception via l'unité de réception 28 comprenant entre autre des données représentant alors la voix des interlocuteurs. Avantageusement, l'échange vocale s'établi à partir d'une application de téléphonie au moyen de l'antenne 15 ou de l'antenne 25 si il a été détecté un défaut de l'antenne 15.

## Revendications

1. Dispositif de communication pour véhicule (2) comprenant :
- une antenne interne (25) ;
- une antenne externe (15) ; et
- un circuit électronique (24) comprenant un première borne (P), une seconde borne (D) et une unité de traitement (28) conçue pour produire un flux de données (F_{R}) par combinaison de premiers signaux reçus sur la première borne (P) et de seconds signaux reçus sur la seconde borne (D),
**caractérisé en ce qu'**il comprend un commutateur (22) conçu pour basculer entre une première configuration, dans laquelle la première borne (P) est reliée à l'antenne externe (15) et la seconde borne (D) est reliée à l'antenne interne (25), et une seconde configuration, dans laquelle la première borne (P) est reliée à l'antenne interne (25), et **en ce que** le circuit électronique (24) comprend une unité d'émission (26) conçue pour générer un signal électrique sur la première borne (P).

2. Dispositif de communication selon la revendication 1, comprenant une unité de commande (35) conçue pour basculer le commutateur (22) de la première configuration à la seconde configuration en cas de défaillance de l'antenne externe (15).

3. Dispositif de communication selon la revendication 2, comprenant une unité de diagnostic (30) conçue pour délivrer une information de défaut de fonctionnement (I) de l'antenne externe (15), l'unité de commande (35) étant conçue pour basculer le commutateur (22) de la première configuration à la seconde configuration à réception de l'information de défaut de fonctionnement (I).

4. Dispositif de communication selon l'une des revendications 1 à 3, dans lequel l'antenne interne (25) et l'antenne externe (15) sont conçues pour être situées de part et d'autre d'un toit (4) du véhicule (2).

5. Dispositif de communication selon la revendication 4, dans lequel l'antenne interne (25) est adaptée pour être située à moins de 5 cm du toit (4) du véhicule (2).

6. Dispositif de communication selon l'une des revendications 1 à 5, dans lequel l'antenne interne (25) et le circuit électronique (24) sont montés sur un circuit imprimé (21).

7. Dispositif de communication selon la revendication 6, dans lequel le circuit imprimé (21) porte le commutateur (22).

8. Dispositif de communication selon la revendication 6 ou 7, dans lequel le circuit imprimé (21) est adapté pour s'étendre substantiellement parallèle à un toit (4) du véhicule (2) à moins de 5 cm du toit (4).

9. Véhicule (2) comprenant un dispositif de communication selon l'une des revendications 1 à 8.

10. Procédé de communication comprenant les étapes suivantes :
- production d'un flux de données (F_{R}) par combinaison de premiers signaux reçus sur une première borne (P) d'un circuit électronique (24) et de seconds signaux reçus sur une seconde borne (D) du circuit électronique (24), un commutateur (22) étant dans une première configuration dans laquelle la première borne (P) est reliée à une antenne externe (15) à un véhicule (2) et la seconde borne (D) est reliée à une antenne interne (25) au véhicule (2) ;
- à réception d'une information (I) indicative d'une défaillance de l'antenne externe (15), commande du basculement du commutateur (22) dans une seconde configuration, dans laquelle la première borne (P) est reliée à l'antenne interne (25) ;
- génération d'un signal électrique sur la première borne (P) par une unité d'émission (26).

## Patentansprüche

1. Kommunikationsvorrichtung (2) für ein Fahrzeug, umfassend:
- eine Innenantenne (25);
- eine Außenantenne (15); und
- einen elektronischen Schaltkreis (24), umfassend einen ersten Anschluss (P), einen zweiten Anschluss (D) und eine Verarbeitungseinheit (28), die dazu ausgelegt ist, durch Kombinieren von ersten Signalen, die über den ersten Anschluss (P) empfangen werden, und zweiten Signalen, die über den zweiten Anschluss (D) empfangen werden, einen Datenstrom (F_{R}) zu bilden,
**dadurch gekennzeichnet, dass** sie einen Schalter (22) umfasst, der dazu ausgelegt ist, zwischen einer ersten Konfiguration, in welcher der erste Anschluss (P) mit der Außenantenne (15) verbunden ist und der zweite Anschluss (D) mit der Innenantenne (25) verbunden ist, und einer zweiten Konfiguration, in welcher der erste Anschluss (P) mit der Innenantenne (25) verbunden ist, umzuschalten, und dass der elektronische Schaltkreis (24) eine Sendeeinheit (26) umfasst, die dazu ausgelegt ist, ein elektrisches Signal am ersten Anschluss (P) zu erzeugen.

2. Kommunikationsvorrichtung nach Anspruch 1, umfassend eine Steuerungseinheit (35), die dazu ausgelegt ist, den Schalter (22) bei einem Ausfall der Außenantenne (15) aus der ersten Konfiguration in die zweite Konfiguration umzuschalten.

3. Kommunikationsvorrichtung nach Anspruch 2, umfassend eine Diagnoseeinheit (30), die dazu ausgelegt ist, eine Betriebsstörungsinformation (I) für die Außenantenne (15) auszugeben, wobei die Steuerungseinheit (35) dazu ausgelegt ist, den Schalter (22) beim Empfangen der Betriebsstörungsinformation (I) aus der ersten Konfiguration in die zweite Konfiguration umzuschalten.

4. Kommunikationsvorrichtung nach einem der Ansprüche 1 bis 3, wobei die Innenantenne (25) und die Außenantenne (15) dazu ausgelegt sind, beiderseits eines Daches (4) des Fahrzeugs (2) angeordnet zu sein.

5. Kommunikationsvorrichtung nach Anspruch 4, wobei die Innenantenne (25) geeignet ist, weniger als 5 cm vom Dach (4) des Fahrzeugs (2) entfernt angeordnet zu sein.

6. Kommunikationsvorrichtung nach einem der Ansprüche 1 bis 5, wobei die Innenantenne (25) und der elektronische Schaltkreis (24) auf einer Leiterplatte (21) montiert sind.

7. Kommunikationsvorrichtung nach Anspruch 6, wobei die Leiterplatte (21) den Schalter (22) trägt.

8. Kommunikationsvorrichtung nach Anspruch 6 oder 7, wobei die Leiterplatte (21) geeignet ist, sich im Wesentlichen parallel zu einem Dach (4) des Fahrzeugs (2) weniger als 5 cm vom Dach (4) entfernt zu erstrecken.

9. Fahrzeug (2) mit einer Kommunikationsvorrichtung nach einem der Ansprüche 1 bis 8.

10. Kommunikationsverfahren, umfassend die folgenden Schritte:
- Bilden eines Datenstroms (F_{R}) durch Kombinieren von ersten Signalen, die über einen ersten Anschluss (P) eines elektronischen Schaltkreises (24) empfangen werden, und von zweiten Signalen, die über einen zweiten Anschluss (D) des elektronischen Schaltkreises (24) empfangen werden, wobei ein Schalter (22) in einer ersten Konfiguration ist, in welcher der erste Anschluss (P) mit einer Außenantenne (15) an einem Fahrzeug (2) und der zweite Anschluss (D) mit einer Innenantenne (25) am Fahrzeug (2) verbunden ist;
- beim Empfangen einer Information (I), die auf einen Ausfall der Außenantenne (15) hindeutet, Steuern des Umschaltens des Schalters (22) in eine zweite Konfiguration, in welcher der erste Anschluss (P) mit der Innenantenne (25) verbunden ist;
- Erzeugen eines elektrischen Signals am ersten Anschluss (P) durch eine Sendeeinheit (26).

## Claims

1. Communication device for a vehicle (2) comprising:
- an internal antenna (25);
- an external antenna (15); and
- an electronic circuit (24) comprising a first terminal (P), a second terminal (D) and a processing unit (28) designed to produce a stream of data (F_{R}) by combining first signals received on the first terminal (P) and second signals received on the second terminal (D),
**characterized in that** it comprises a switch (22) designed to switch between a first configuration, in which the first terminal (P) is linked to the external antenna (15) and the second terminal (D) is linked to the internal antenna (25), and a second configuration, in which the first terminal (P) is linked to the internal antenna (25), and **in that** the electronic circuit (24) comprises a transmission unit (26) designed to generate an electrical signal on the first terminal (P).

2. Communication device according to Claim 1, comprising a control unit (35) designed to switch the switch (22) from the first configuration to the second configuration in case of failure of the external antenna (15) .

3. Communication device according to Claim 2, comprising a diagnostic unit (30) designed to deliver external antenna (15) operation fault information (I), the control unit (35) being designed to switch the switch (22) from the first configuration to the second configuration on receipt of the operation fault information (I).

4. Communication device according to one of Claims 1 to 3, in which the internal antenna (25) and the external antenna (15) are situated on either side of a roof (4) of the vehicle (2).

5. Communication device according to Claim 4, in which the internal antenna (25) is situated at less than 5 cm from the roof (4) of the vehicle (2).

6. Communication device according to one of Claims 1 to 5, in which the internal antenna (25) and the electronic circuit (24) are mounted on a printed circuit board (21).

7. Communication device according to Claim 6, in which the printed circuit board (21) bears the switch (22).

8. Communication device according to Claim 6 or 7, in which the printed circuit board (21) extends substantially parallel to a roof (4) of the vehicle (2) at less than 5 cm from the roof (4).

9. Vehicle (2) comprising a communication device according to one of Claims 1 to 8.

10. Communication method comprising the following steps:
- production of a stream of data (F_{R}) by combining first signals received on a first terminal (P) of an electronic circuit (24) and second signals received on a second terminal (D) of the electronic circuit (24), a switch (22) being in a first configuration in which the first terminal (P) is linked to an external antenna (15) external to a vehicle (2) and the second terminal (D) is linked to an internal antenna (25) internal to the vehicle (2);
- on receipt of information (I) indicative of a failure of the external antenna (15), commanding the switching of the switch (22) into a second configuration, in which the first terminal (P) is linked to the internal antenna (25) ;
- generation of an electrical signal on the first terminal (P) by a transmission unit (26).
